# EUROPEAN PATENT APPLICATION

(11) **EP 4 718 620 A1**
(43) Date of publication of application: **01.04.2026**
(21) Application number: 25193799.1
(22) Date of filing: 04.08.2025
(51) Int. Cl.: H01M 50/533, H01M 4/66, H01M 10/04

(54) **CURRENT COLLECTOR AND BATTERY**

(30) Priority: 26.09.2024 JP 2024167286
(71) Applicant: TOYOTA JIDOSHA KABUSHIKI KAISHA, Toyota-shi, Aichi-ken 471-8571 (JP)
(72) Inventor: SUGIHARA, Atsushi, Toyota-shi, 471-8571 (JP); MIMURA, Tetsuya, Toyota-shi, 471-8571 (JP); MORIYAMA, Satoshi, Toyota-shi, 471-8571 (JP); HAGA, Masayoshi, Toyota-shi, 471-8571 (JP); FURUKAWA, Masaki, Toyota-shi, 471-8571 (JP); YAMASHITA, Keita, Toyota-shi, 471-8571 (JP); SAKAMOTO, Ryuto, Toyota-shi, 471-8571 (JP); NAGAI, Hideyuki, Toyota-shi, 471-8571 (JP); UEDA, Masashi, Toyota-shi, 471-8571 (JP)
(74) Representative: Kuhnen & Wacker Patent- und Rechtsanwaltsbüro PartG mbB

(57) **Abstract**

A current collector (100A) includes a support portion (110) and a conductive portion (120). The support portion (110) includes an electrically insulating resin composition. The conductive portion (120) includes a first conductive layer (121), a second conductive layer (122), and a third conductive layer (123). The first conductive layer (121) and the second conductive layer (122) extend from the support portion (110). The third conductive layer (123) is disposed between the first conductive layer (121) and the second conductive layer (122), is joined to both the first conductive layer (121) and the second conductive layer (122), and extends from between the first conductive layer (121) and the second conductive layer (122).

## Description

### CROSS REFERENCE TO RELATED APPLICATIONS

This nonprovisional application is based on Japanese Patent Application No. 2024-167286 filed on September 26, 2024 with the Japan Patent Office, the entire contents of which are hereby incorporated by reference.

### BACKGROUND

### Field

The present disclosure relates to a current collector and a battery.

### Description of the Background Art

Japanese National Patent Publication No. 2024-510696 discloses an electrode plate. The electrode plate includes a current collector, an active material layer, and an electrical connection member. The active material layer is disposed on a surface of the current collector. The electrical connection member is electrically connected to the current collector. The current collector includes a support layer and a conductive layer. The conductive layer is disposed on a surface of the support layer. The electrical connection member and the current collector are connected to each other by welding at an edge of the current collector. The welding connection region is referred to as a transfer welding region.

### SUMMARY

The current collector with the electrical connection member connected thereto is relatively thick. This increases the volume ratio of the current collector in the entire battery, resulting in a smaller energy density of the battery. When the active material layer is increased and the transfer welding region is reduced to improve the energy density of the battery, the electrical resistance in the transfer welding region increases.

The present disclosure has been made in view of the problem described above. An object of the present disclosure is to provide a current collector that can have a smaller thickness and a smaller electrical resistance at a conductive portion.

A current collector according to an aspect of the present disclosure includes a support portion and a conductive portion. The support portion includes an electrically insulating resin composition. The conductive portion includes a first conductive layer, a second conductive layer, and a third conductive layer. The first conductive layer and the second conductive layer extend from the support portion. The third conductive layer is disposed between the first conductive layer and the second conductive layer, is joined to both the first conductive layer and the second conductive layer, and extends from between the first conductive layer and the second conductive layer.

In the current collector according to an aspect of the present disclosure, preferably, the third conductive layer is separated from the support portion.

In the current collector according to an aspect of the present disclosure, preferably, a thickness of the third conductive layer is substantially equal to a thickness of the support portion.

In the current collector according to an aspect of the present disclosure, preferably, a thickness of the first conductive layer is smaller than a thickness of the third conductive layer. A thickness of the second conductive layer is smaller than the thickness of the third conductive layer.

A battery according to an aspect of the present disclosure includes an electrode body, an external terminal, and a coupling portion. The electrode body includes a first electrode, a second electrode, and a separator. The first electrode includes a current collector and an active material layer. The current collector includes a support portion and a conductive portion. The support portion includes an electrically insulating resin composition. The conductive portion includes a first conductive layer, a second conductive layer, and a third conductive layer. The first conductive layer and the second conductive layer extend from the support portion. The third conductive layer is disposed between the first conductive layer and the second conductive layer, is joined to both the first conductive layer and the second conductive layer, and extends from between the first conductive layer and the second conductive layer. The active material layer is stacked on the first conductive layer. The separator is stacked on the active material layer. The second electrode is stacked over the active material layer with the separator in between. The external terminal is electrically connected to the coupling portion. The coupling portion is joined to the third conductive layer.

In the battery according to an aspect of the present disclosure, preferably, the third conductive layer is separated from the support portion.

In the battery according to an aspect of the present disclosure, preferably, a thickness of the third conductive layer is substantially equal to a thickness of the support portion.

In the battery according to an aspect of the present disclosure, preferably, a thickness of the first conductive layer is smaller than a thickness of the third conductive layer. A thickness of the second conductive layer is smaller than the thickness of the third conductive layer.

In the battery according to an aspect of the present disclosure, preferably, the support portion has a support edge. The support edge faces an extension direction. The extension direction is a direction in which the first conductive layer extends from the support portion. The active material layer has an active material edge. The active material edge faces the extension direction. The active material edge is aligned with the support edge in a thickness direction of the support portion.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view of a battery according to Embodiment 1.
Fig. 2 is an exploded perspective view of the battery according to Embodiment 1.
Fig. 3 is a sectional view of the battery of Fig. 1 as viewed in the direction of arrow III-III.
Fig. 4 is a sectional view of an electrode body of Fig. 3 as viewed in the direction of arrow IV-IV.
Fig. 5 is a sectional view of the electrode body of Fig. 3 as viewed in the direction of arrow V-V.
Fig. 6 is a partial schematic sectional view of the electrode body of Fig. 3 as viewed in the direction of arrow VI-VI.
Fig. 7 is a developed view of a first electrode.
Fig. 8 is an enlarged partial sectional view of a region VIII of a first electrode of Fig. 5.

### DESCRIPTION OF THE PREFERRED EMBODIMENTS

A current collector and a battery according to an embodiment of the present disclosure will be described with reference to the drawings. In the drawings referred to below, the same or corresponding components have the same reference characters allotted.

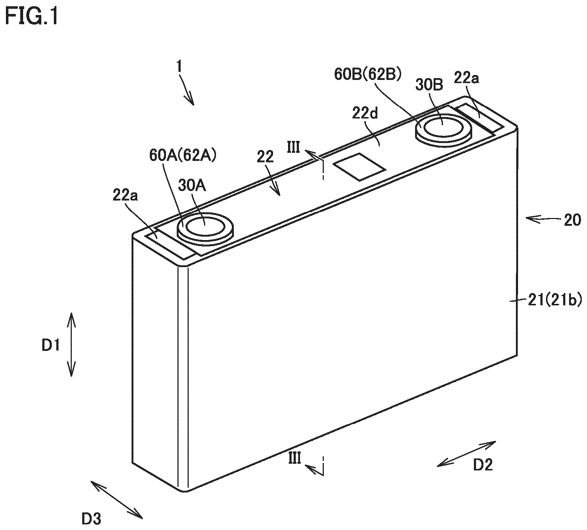

Fig. 1 is a perspective view of a battery according to Embodiment 1. As shown in Fig. 1, a battery 1 according to Embodiment 1 is a so-called rectangular battery. Battery 1 may be a secondary battery capable of charging and discharging, such as a lithium-ion battery or a nickel-metal hydride battery. Battery 1 may be used as, for example, a cell included in a power storage module mounted in an electrically powered vehicle.

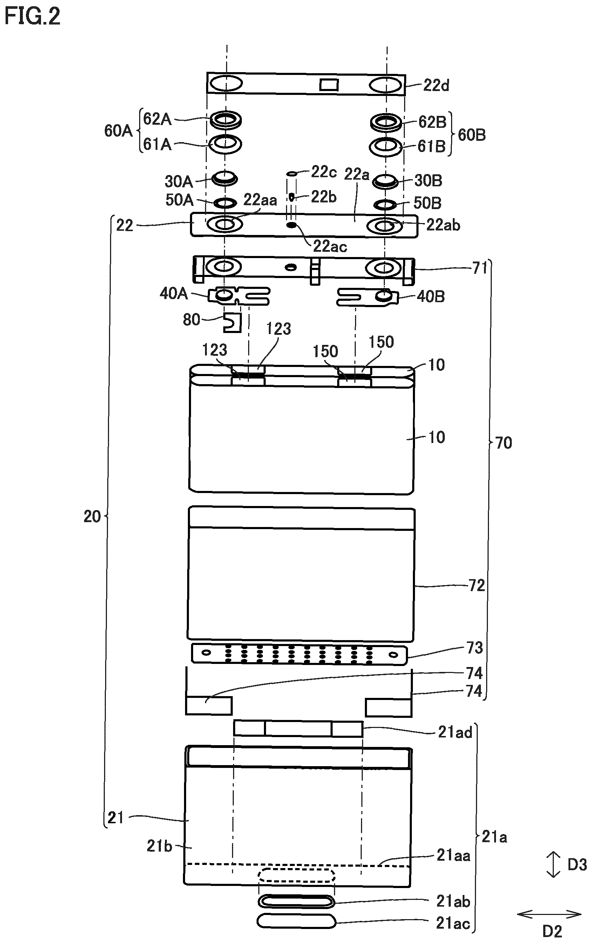

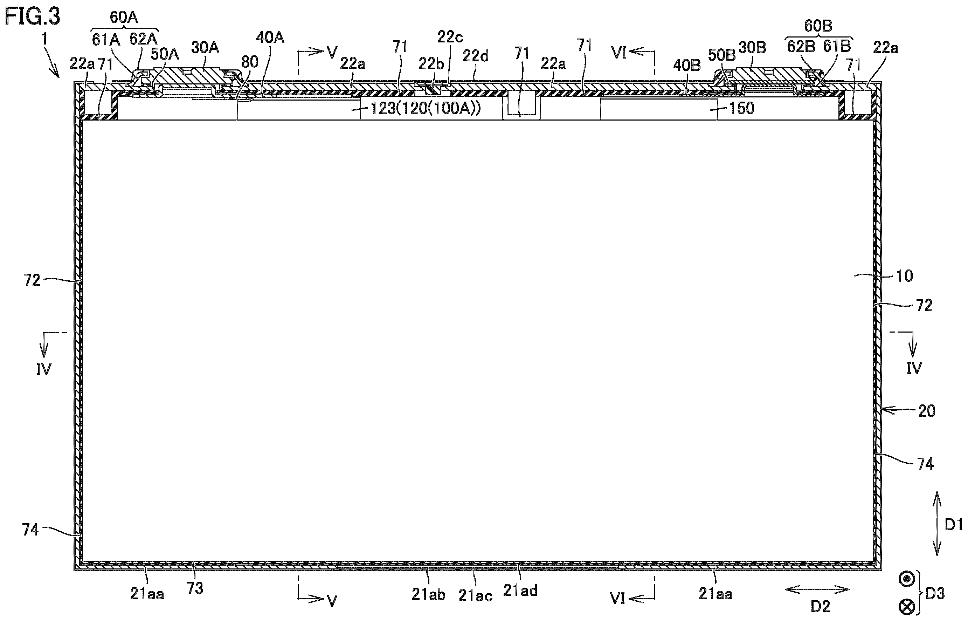

Fig. 2 is an exploded perspective view of the battery according to Embodiment 1. Fig. 3 is a sectional view of the battery of Fig. 1 as viewed in the direction of arrow III-III. As shown in Figs. 1 to 3, battery 1 according to Embodiment 1 of the present disclosure includes an electrode body 10, a case 20, a first external terminal 30A, a second external terminal 30B, a first coupling portion 40A, a second coupling portion 40B, a first seal ring 50A, a second seal ring 50B, a first terminal support portion 60A, a second terminal support portion 60B, an insulating member 70, and a fuse protective portion 80. First, the components of battery 1 other than electrode body 10 will be described.

Case 20 is electrically conductive. A conductive portion of case 20 is made of, for example, a metal such as aluminum. Case 20 houses electrode body 10. Case 20 also houses an electrolyte (not shown).

Case 20 includes a case body 21 and a lid 22. Case body 21 includes a bottom wall 21a and a peripheral wall 21b that rises from bottom wall 21a.

Bottom wall 21a includes a bottom body 21aa, a pressure release valve 21ab, an outer protective film 21ac, and an inner protective film 21ad. Peripheral wall 21b rises from bottom body 21aa. Pressure release valve 21ab is provided in bottom body 21aa. Outer protective film 21ac covers pressure release valve 21ab from the outside. Inner protective film 21ad covers pressure release valve 21ab from the inside. Bottom body 21aa and pressure release valve 21ab are made of a metal such as aluminum.

An opening is formed at the top of peripheral wall 21b. Peripheral wall 21b has an approximately rectangular external shape as viewed from the direction of the opening. The opening and bottom wall 21a are aligned in a first direction D1. First direction D1 may be the height direction or the upward-downward direction of battery 1. Peripheral wall 21b is made of a metal such as aluminum.

Lid 22 includes a lid body 22a, a sealing plug 22b, a plug cover 22c, and an insulating cover 22d.

Lid body 22a is joined to peripheral wall 21b by welding or the like so as to close the opening of peripheral wall 21b. Lid body 22a has a first coupling hole 22aa, a second coupling hole 22ab, and an injection hole 22ac. Injection hole 22ac is a through hole for injecting the electrolyte into case body 21 during manufacture of battery 1.

Sealing plug 22b seals injection hole 22ac. Plug cover 22c covers injection hole 22ac and sealing plug 22b. Insulating cover 22d covers injection hole 22ac, sealing plug 22b, and plug cover 22c.

First external terminal 30A and second external terminal 30B are provided so as to be exposed to the outside in battery 1. First coupling portion 40A and second coupling portion 40B are electrically conductive. First coupling portion 40A and second coupling portion 40B are at least partially disposed inside case 20.

First external terminal 30A or first coupling portion 40A is inserted into first coupling hole 22aa. First external terminal 30A is electrically connected to first coupling portion 40A. Specifically, first external terminal 30A and first coupling portion 40A are joined to each other. First coupling portion 40A is joined to electrode body 10. As a result, first external terminal 30A is electrically connected to electrode body 10.

Second external terminal 30B or second coupling portion 40B is inserted into second coupling hole 22ab. Second external terminal 30B is electrically connected to second coupling portion 40B. Specifically, second external terminal 30B and second coupling portion 40B are joined to each other. Second coupling portion 40B is joined to electrode body 10. As a result, second external terminal 30B is electrically connected to electrode body 10.

In the present embodiment, first external terminal 30A is a positive terminal, and second external terminal 30B is a negative terminal. First external terminal 30A and second external terminal 30B are aligned in a second direction D2. Second direction D2 is a direction orthogonal to first direction D1.

First seal ring 50A is provided along first coupling hole 22aa. First seal ring 50A is provided in the gap between lid body 22a and first external terminal 30A, and seals this gap. Second seal ring 50B is provided along second coupling hole 22ab. Second seal ring 50B is provided in the gap between lid body 22a and second external terminal 30B, and seals this gap. First seal ring 50A and second seal ring 50B are electrically insulating.

First terminal support portion 60A is locked to lid body 22a. First terminal support portion 60A supports first external terminal 30A from the outer peripheral side of first external terminal 30A. First terminal support portion 60A includes a first locking ring 61A and a first covering ring 62A. First locking ring 61A extends annularly so as to surround first coupling hole 22aa and is directly locked to lid body 22a. First covering ring 62A covers first locking ring 61A. First locking ring 61A supports first external terminal 30A via first covering ring 62A. First covering ring 62A is made of a resin member having electrical insulation properties or relatively weak electrical conductivity.

Second terminal support portion 60B is locked to lid body 22a. Second terminal support portion 60B supports second external terminal 30B from the outer peripheral side of second external terminal 30B. Second terminal support portion 60B includes a second locking ring 61B and a second covering ring 62B. Second locking ring 61B extends annularly so as to surround second coupling hole 22ab and is directly locked to lid body 22a. Second covering ring 62B covers second locking ring 61B. Second locking ring 61B supports second external terminal 30B via second covering ring 62B. Second covering ring 62B is made of an electrically insulating resin member.

Insulating member 70 is electrically insulating. Insulating member 70 is disposed between electrode body 10 and case 20. Insulating member 70 electrically insulates electrode body 10 and case 20 from each other. Insulating member 70 includes an insulating bracket 71, a peripheral surface insulating portion 72, a bottom insulating portion 73, and an insulating tape 74.

Insulating bracket 71 is disposed between electrode body 10 and lid body 22a. Insulating bracket 71 is relatively rigid and is in contact with both electrode body 10 and lid body 22a. As a result, electrode body 10 is fixed to case 20 in first direction D1.

Peripheral surface insulating portion 72 is disposed between electrode body 10 and peripheral wall 21b. Peripheral surface insulating portion 72 is formed of a film-shaped member.

Bottom insulating portion 73 is disposed between electrode body 10 and bottom wall 21a. Bottom insulating portion 73 is formed of a film-shaped member.

Insulating tape 74 is bonded to both peripheral surface insulating portion 72 and bottom insulating portion 73. Insulating tape 74 fixes peripheral surface insulating portion 72 and bottom insulating portion 73 to each other.

As shown in Fig. 2, battery 1 according to the present embodiment includes a plurality of electrode bodies 10. Battery 1 typically includes two electrode bodies 10. These electrode bodies 10 are disposed in a third direction D3. Third direction D3 is a direction orthogonal to both first direction D1 and second direction D2. Peripheral surface insulating portion 72 may integrally cover the plurality of electrode bodies 10 such that these electrode bodies 10 are fixed to each other.

The following will describe one electrode body 10 of the plurality of electrode bodies 10. Each of the plurality of electrode bodies 10 may have a configuration described below.

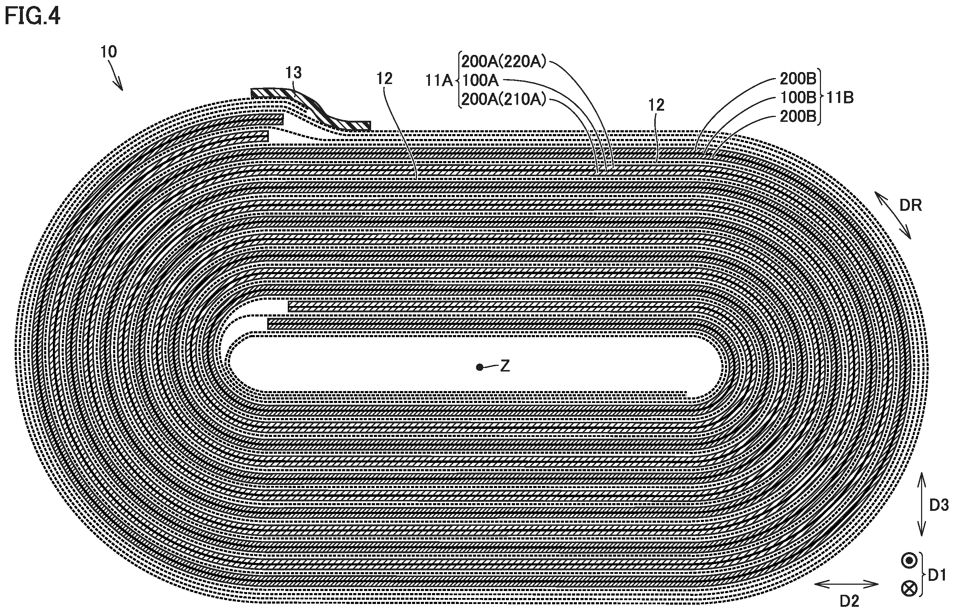

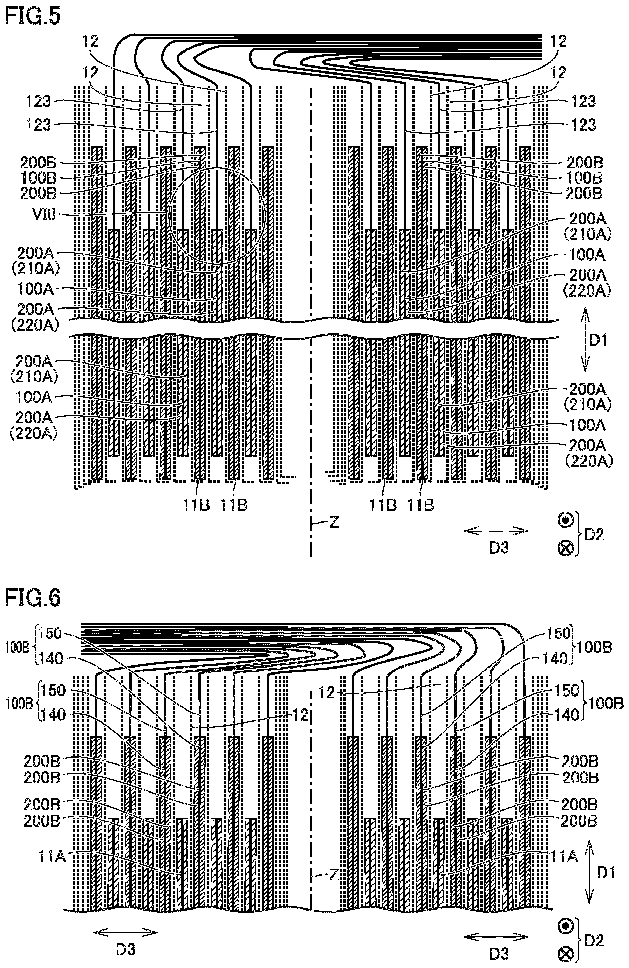

Fig. 4 is a sectional view of the electrode body of Fig. 3 as viewed in the direction of arrow IV-IV. Fig. 5 is a sectional view of the electrode body of Fig. 3 as viewed in the direction of arrow V-V. Fig. 6 is a schematic sectional view of the electrode body of Fig. 3 as viewed in the direction of arrow VI-VI. As shown in Figs. 2 to 6, electrode body 10 includes a first electrode 11A, a second electrode 11B, and a separator 12. Electrode body 10 is wound such that first electrode 11A, second electrode 11B, and separator 12 surround a winding axis Z. In the present embodiment, thus, electrode body 10 is a so-called wound electrode body. However, electrode body 10 may be a stacked electrode body in which first electrode 11A, second electrode 11B, and separator 12 are stacked in one direction (e.g., third direction D3). In Figs. 4 to 6, separator 12 is schematically indicated by the broken line.

First electrode 11A and second electrode 11B have a sheet-like external shape. Electrode body 10 is composed of a group of polar plates in which first electrode 11A and second electrode 11B are wound with one or more separators 12 in between.

In the present embodiment, first electrode 11A is a positive electrode, and second electrode 11B is a negative electrode. However, first electrode 11A may be the negative electrode, and second electrode 11B may be the positive electrode.

Separator 12 is provided between first electrode 11A and second electrode 11B. Separator 12 separates first electrode 11A and second electrode 11B from each other while allowing ions to move between first electrode 11A and second electrode 11B. The ions described above are, for example, lithium ions. Separator 12 is electrically insulating.

Of first electrode 11A, second electrode 11B, and separator 12, separator 12 is located on the innermost side with winding axis Z as the center. In addition, of first electrode 11A, second electrode 11B, and separator 12, separator 12 is located on the outermost side with winding axis Z as the center. The outer edge of separator 12 in a winding direction DR is fixed with tape member 13 disposed on the outer peripheral surface of separator 12.

Separator 12 may include, for example, a polyolefin resin. Separator 12 may be substantially made of the polyolefin resin. The polyolefin resin may include, for example, at least one selected from the group consisting of polyethylene (PE) and polypropylene (PP).

First electrode 11A includes a first current collector 100A, a first active material layer 200A, and a protective portion 300.

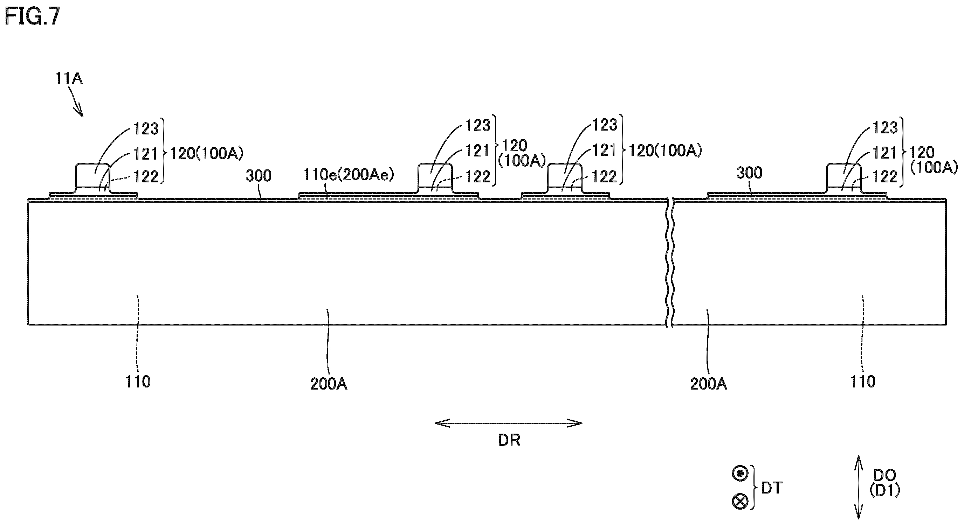

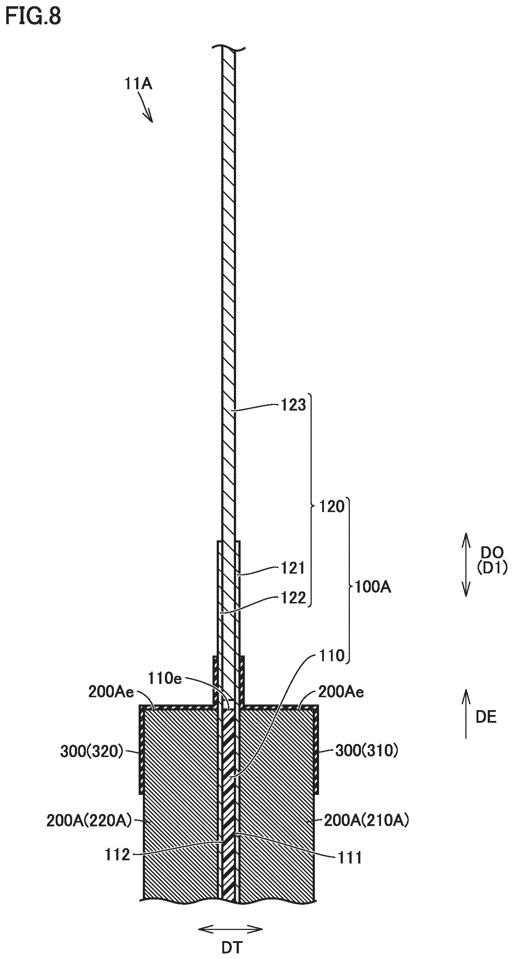

Fig. 7 is a developed view of the first electrode. In other words, Fig. 7 shows the state of first electrode 11A before it is wound. Fig. 8 is an enlarged partial sectional view of a region VIII of the first electrode in Fig. 5. As shown in Figs. 7 and 8, first current collector 100A includes a support portion 110 and a conductive portion 120.

Support portion 110 is made of an electrically insulating resin composition. Thus, first current collector 100A is a composite current collector composed of an electrically conductive member and an electrically insulating member. Support portion 110 is made of a material higher in rigidity than separator 12. Support portion 110 is made of, for example, a resin composition including a polyamide resin, a polyester resin, or a polyolefin resin. For higher rigidity, support portion 110 is preferably made of a resin composition including the polyester resin. More preferably, support portion 110 is substantially made of the polyester resin. The polyester resin may be, for example, polyethylene terephthalate. This can increase the rigidity of first current collector 100A while maintaining the electrical insulation of support portion 110. As a result, support portion 110 can be made relatively thin.

An orthogonal direction DO, which is orthogonal to a thickness direction DT of support portion 110, is approximately parallel to first direction D1. In other words, support portion 110 extends approximately parallel to first direction D1.

Support portion 110 has a support edge 110e, a first support surface 111, and a second support surface 112. Support edge 110e faces a first side in first direction D1. Support edge 110e extends along winding direction DR of electrode body 10. First support surface 111 is a face that faces a first side in thickness direction DT of support portion 110. Second support surface 112 is a surface that faces a second side in thickness direction DT of support portion 110.

The thickness of support portion 110 is, for example, preferably 20 µm or less, more preferably 15 µm or less, and still more preferably 10 µm or less, for a reduced overall thickness of electrode body 10. The thickness of support portion 110 is not particularly limited, as long as it has a desired rigidity. The thickness of support portion 110 is only required to be, for example, 2 µm or more.

As shown in Figs. 5 to 8, conductive portion 120 includes a first conductive layer 121, a second conductive layer 122, and a plurality of third conductive layers 123.

First conductive layer 121 is provided on first support surface 111 of support portion 110 (see Fig. 8). First conductive layer 121 extends from support portion 110. More specifically, first conductive layer 121 extends so as to protrude from first support surface 111. An extension direction DE in which first conductive layer 121 extends from support portion 110 is a direction that support edge 110e faces. Extension direction DE may extend along first direction D1 or along orthogonal direction DO.

In the present embodiment, first conductive layer 121 is located on the winding axis Z side as viewed from support portion 110. Also, first conductive layer 121 is in contact with support portion 110 over the entire first support surface 111.

Second conductive layer 122 is provided on second support surface 112 of support portion 110. Second conductive layer 122 extends from support portion 110. More specifically, second conductive layer 122 extends so as to protrude from second support surface 112. A direction in which second conductive layer 122 extends from support portion 110 is the same as extension direction DE that is the direction in which first conductive layer 121 extends from support portion 110. The extension length, by which second conductive layer 122 extends from support portion 110, is substantially equal to the extension length, by which first conductive layer 121 extends from support portion 110, or may be different.

In the present embodiment, second conductive layer 122 is located on the side opposite to winding axis Z as viewed from support portion 110. Also, second conductive layer 122 is in contact with support portion 110 over the entire second support surface 112.

In the present embodiment, first conductive layer 121 has a plurality of extending portions (see Fig. 7). Second conductive layer 122 has a plurality of extending portions. The plurality of extending portions of first conductive layer 121 are aligned so as to correspond one-to-one to the plurality of extending portions of second conductive layer 122 in thickness direction DT.

The plurality of third conductive layers 123 are disposed between first conductive layer 121 and second conductive layer 122 (see Figs. 7 and 8). The plurality of third conductive layers 123 are joined to both first conductive layer 121 and second conductive layer 122. Each of the plurality of third conductive layers 123 extends from between first conductive layer 121 and second conductive layer 122.

The plurality of third conductive layers 123 face support edge 110e of support portion 110. The plurality of third conductive layers 123 are separated from support edge 110e of support portion 110. The plurality of third conductive layers 123 may be in contact with support edge 110e of support portion 110.

The plurality of third conductive layers 123 are aligned in thickness direction DT so as to correspond one-to-one to the plurality of extending portions of first conductive layer 121 (see Fig. 7). The plurality of third conductive layers 123 are aligned in thickness direction DT so as to correspond one-to-one to the plurality of extending portions of second conductive layer 122. Also, the plurality of third conductive layers 123 are joined to first conductive layer 121 and second conductive layer 122 by, for example, ultrasonic welding.

The plurality of third conductive layers 123 are disposed to be aligned with each other in a third direction D3 (see Fig. 5). The plurality of third conductive layers 123 are joined to each other by, for example, ultrasonic welding. The plurality of third conductive layers 123 are joined to first coupling portion 40A by, for example, ultrasonic welding (see Figs. 2 and 3).

The thickness of first conductive layer 121 is smaller than the thickness of third conductive layer 123 and is smaller than the thickness of support portion 110 (see Fig. 8). The thickness of second conductive layer 122 is smaller than the thickness of third conductive layer 123 and is smaller than the thickness of support portion 110. The thickness of first conductive layer 121 and the thickness of second conductive layer 122 are preferably 5 µm or less, and more preferably 2 µm or less, and still more preferably 1 µm or less, for a reduced overall thickness of electrode body 10. The thickness of first conductive layer 121 and the thickness of second conductive layer 122 are only required to be, for example, 0.1 µm or more in order to prevent excessive increases in the electrical resistances of first conductive layer 121 and second conductive layer 122. The thickness of third conductive layer 123 is not particularly limited, but may be 20 µm or less and may be 15µm or less or 10 µm or less. The thickness of third conductive layer 123 may exceed 5 µm.

When the thickness of first conductive layer 121 and the thickness of second conductive layer 122 are 5 µm or less, it is difficult to directly weld first conductive layer 121 and second conductive layer 122 to each other or to directly join these conductive layers to each other by ultrasonic welding. The thickness of third conductive layer 123 is substantially equal to the thickness of support portion 110.

The method of forming first conductive layer 121, second conductive layer 122, and third conductive layer 123 is not particularly limited. In the present embodiment, first conductive layer 121, second conductive layer 122, and third conductive layer 123 are typically formed of a metal film. Thus, first conductive layer 121 and second conductive layer 122 are provided to extend from support portion 110. The metal film may typically be manufactured by extrusion molding. First conductive layer 121 and second conductive layer 122 may be bonded to support portion 110 with an adhesive or may be compression-bonded to support portion 110 by mechanical roll pressing. First conductive layer 121, second conductive layer 122, and third conductive layer 123 are typically made of a metal including aluminum. Thus, first current collector 100A including conductive portion 120 can be preferably used as a positive electrode current collector. First current collector 100A may be a negative electrode current collector, and first conductive layer 121, second conductive layer 122, and third conductive layer 123 may be made of a metal including copper.

First active material layer 200A is stacked on first conductive layer 121. First active material layer 200A is a positive electrode active material layer but may be a negative electrode active material layer. In the present embodiment, first active material layer 200A is also stacked on second conductive layer 122. First active material layer 200A includes a first inner active material layer 210A and a first outer active material layer 220A. First inner active material layer 210A is stacked on first conductive layer 121. First outer active material layer 220A is stacked on second conductive layer 122.

First active material layer 200A has an active material edge 200Ae. Active material edge 200Ae faces extension direction DE. Active material edge 200Ae is aligned with support edge 110e in thickness direction DT of support portion 110. More specifically, active material edge 200Ae of first inner active material layer 210A is aligned with support edge 110e in thickness direction DT. Active material edge 200Ae of first outer active material layer 220 is aligned with support edge 110e in thickness direction DT.

Separator 12 is stacked on first active material layer 200A in the radial direction centered around winding axis Z (see Fig. 5). Separator 12 is stacked on first inner active material layer 210A in the radial direction described above. Separator 12 is also stacked on first outer active material layer 220A in the radial direction described above.

Protective portion 300 is electrically insulating and is made of, for example, ceramic. Protective portion 300 covers the upper portion of first active material layer 200A. Protective portion 300 covers active material edge 200Ae.

Protective portion 300 includes an inner protective portion 310 and an outer protective portion 320. Inner protective portion 310 covers the upper portion of first inner active material layer 210A. Outer protective portion 320 covers the upper portion of first outer active material layer 220A.

Inner protective portion 310 is further provided on first conductive layer 121 on the side opposite to third conductive layer 123 as viewed from first conductive layer 121. Thus, protective portion 300 is not located on an electrically conductive path from first conductive layer 121 to third conductive layer 123. This can suppress an increase in the electrical resistance of conductive portion 120. Outer protective portion 320 is further provided on second conductive layer 122 on the side opposite to third conductive layer 123 as viewed from second conductive layer 122. Thus, protective portion 300 is not located on an electrically conductive path from second conductive layer 122 to third conductive layer 123. This can suppress an increase in the electrical resistance of conductive portion 120.

As shown in Figs. 4 to 6, second electrode 11B is stacked over first active material layer 200A with separator 12 in between in the radial direction described above. More specifically, second electrode 11B is stacked over first inner active material layer 210A with separator 12 in between, and is also stacked over first outer active material layer 220A with separator 12 in between.

Second electrode 11B includes a second current collector 100B and a second active material layer 200B. Second current collector 100B includes a conductive support portion 140 and a plurality of tabs 150 (see Fig. 6). Conductive support portion 140 extends along orthogonal direction DO (first direction D1). The plurality of tabs 150 extend from the upper edge of conductive support portion 140. The plurality of tabs 150 are joined to each other by ultrasonic welding and are also joined to second coupling portion 40B (see Figs. 2 and 3).

The plurality of tabs 150 and conductive support portion 140 are formed of an integral member, for example, are formed of a metal film. In the present embodiment, the plurality of tabs 150 and conductive support portion 140 are made of, for example, a metal including copper. Thus, second current collector 100B can be preferably used as a negative electrode current collector. When first current collector 100A is a negative electrode current collector and second current collector 100B is a positive electrode current collector, the plurality of tabs 150 and conductive support portion 140 may be made of a metal including aluminum.

Second active material layer 200B is stacked on both sides of conductive support portion 140 of second current collector 100B. In the present embodiment, second electrode 11B is a negative electrode. Thus, second active material layer 200B is a negative electrode active material layer. Second active material layer 200B may be a positive electrode active material layer.

As described above, first current collector 100A according to an embodiment of the present disclosure includes support portion 110 and conductive portion 120. Support portion 110 includes an electrically insulating resin composition. Conductive portion 120 includes first conductive layer 121, second conductive layer 122, and third conductive layer 123. First conductive layer 121 and second conductive layer 122 extend from support portion 110. Third conductive layer 123 is disposed between first conductive layer 121 and second conductive layer 122, is joined to both first conductive layer 121 and second conductive layer 122, and extends from between first conductive layer 121 and second conductive layer 122.

With the configuration described above, third conductive layer 123 can be disposed between first conductive layer 121 and second conductive layer 122 extending from support portion 110, thus preventing third conductive layer 123 from overlapping support portion 110 in thickness direction DT of support portion 110. This can reduce the thickness of first current collector 100A. Further, third conductive layer 123 can be joined to extending first conductive layer 121 and second conductive layer 122, thus securing a wide joint region between first conductive layer 121 and second conductive layer 122. This can reduce the electrical resistance of conductive portion 120.

In the present embodiment, third conductive layer 123 is separated from support portion 110. With this configuration, when third conductive layer 123 tilts with respect to the direction of extension of support portion 110, first conductive layer 121 and second conductive layer 122 can easily bend between third conductive layer 123 and support portion 110. This can prevent local concentration of a stress on first conductive layer 121 and second conductive layer 122.

In the present embodiment, a thickness of third conductive layer 123 is substantially equal to a thickness of support portion 110.

With the configuration described above, bending of first conductive layer 121 and second conductive layer 122 can be prevented between support portion 110 and third conductive layer 123. This leads to an improvement in the strength of conductive portion 120.

In the present embodiment, a thickness of first conductive layer 121 is smaller than a thickness of third conductive layer 123. A thickness of second conductive layer 122 is smaller than the thickness of third conductive layer 123.

With the configuration described above, the thickness of first current collector 100A can be reduced more while maintaining a joint strength between third conductive layer 123 and any other member (typically, first coupling portion 40A).

In the present embodiment, battery 1 according to an embodiment of the present disclosure includes electrode body 10, first external terminal 30A, and first coupling portion 40A. Electrode body 10 includes first electrode 11A, second electrode 11B, and separator 12. First electrode 11A includes first current collector 100A and first active material layer 200A. First current collector 100A includes support portion 110 and conductive portion 120. Support portion 110 includes an electrically insulating resin composition. Conductive portion 120 includes first conductive layer 121, second conductive layer 122, and third conductive layer 123. First conductive layer 121 and second conductive layer 122 extend from support portion 110. Third conductive layer 123 is disposed between first conductive layer 121 and second conductive layer 122, is joined to both first conductive layer 121 and second conductive layer 122, and extends from between first conductive layer 121 and second conductive layer 122. First active material layer 200A is stacked on first conductive layer 121. Separator 12 is stacked on first active material layer 200A. Second electrode 11B is stacked over first active material layer 200A with separator 12 in between. First external terminal 30A is electrically connected to first coupling portion 40A. First coupling portion 40A is joined to third conductive layer 123.

With the configuration described above, third conductive layer 123 joined to first coupling portion 40A can be disposed between first conductive layer 121 and second conductive layer 122 extending from support portion 110, thus preventing third conductive layer 123 from overlapping support portion 110 in thickness direction DT of support portion 110. Thus, the thickness of first current collector 100A is reduced. Thus, the energy density of battery 1 can be improved by reducing the volume ratio of first current collector 100A and increasing the volume ratio of first active material layer 200A in the entire battery 1. Further, third conductive layer 123 can be joined to extending first conductive layer 121 and second conductive layer 122, thus securing a wide joint region between first conductive layer 121 and second conductive layer 122. Thus, the electrical resistance in conductive portion 120 can be reduced, and first active material layer 200A can be increased to improve the energy density of battery 1.

In the present embodiment, support portion 110 has support edge 110e. Support edge 110e faces extension direction DE. Extension direction DE is a direction in which first conductive layer 121 extends from support portion 110. First active material layer 200A has active material edge 200Ae. Active material edge 200Ae faces extension direction DE. Active material edge 200Ae is aligned with support edge 110e in thickness direction DT of support portion 110.

With the configuration described above, first active material layer 200A can be firmly supported by support portion 110 up to active material edge 200Ae with first conductive layer 121 in between. Also, first active material layer 200A can be extended in extension direction DE up to a position at which first active material layer 200A is aligned with support edge 110e. Thus, the energy density of battery 1 can be improved.

In the course of providing first active material layer 200A on first conductive layer 121, first active material layer 200A may be compressed in thickness direction DT together with first conductive layer 121 and support portion 110. In this case, with the configuration described above, the portion of first active material layer 200A which is located in proximity to active material edge 200Ae can be compressed more reliably together with support portion 110.

The configurations that can be combined may be combined with each other in the description of the embodiment described above.

Although the embodiment of the present disclosure has been described, it should be understood that the present embodiment disclosed herein is illustrative and non-restrictive in every respect. The scope of the present disclosure is defined by the terms of the claims and is intended to include any modifications within the scope and meaning equivalent to the terms of the claims.

## Claims

1. A current collector comprising:
a support portion (110); and
a conductive portion (120), wherein
the support portion (110) includes an electrically insulating resin composition,
the conductive portion (120) includes a first conductive layer (121), a second conductive layer (122), and a third conductive layer (123),
the first conductive layer (121) and the second conductive layer (122) extend from the support portion (110), and
the third conductive layer (123) is disposed between the first conductive layer (121) and the second conductive layer (122), is joined to both the first conductive layer (121) and the second conductive layer (122), and extends from between the first conductive layer (121) and the second conductive layer (122).

2. The current collector according to claim 1, wherein the third conductive layer (123) is separated from the support portion (110).

3. The current collector according to claim 1, wherein a thickness of the third conductive layer (123) is substantially equal to a thickness of the support portion (110).

4. The current collector according to any one of claims 1 to 3, wherein
a thickness of the first conductive layer (121) is smaller than a thickness of the third conductive layer (123), and
a thickness of the second conductive layer (122) is smaller than the thickness of the third conductive layer (123).

5. A battery comprising:
an electrode body (10);
an external terminal (30A); and
a coupling portion (40A), wherein
the electrode body (10) includes a first electrode (11A), a second electrode (11B), and a separator (12),
the first electrode (11A) includes a current collector (100A) and an active material layer (200A),
the current collector (100A) includes a support portion (110) and a conductive portion (120),
the support portion (110) includes an electrically insulating resin composition,
the conductive portion (120) includes a first conductive layer (121), a second conductive layer (122), and a third conductive layer (123),
the first conductive layer (121) and the second conductive layer (122) extend from the support portion (110),
the third conductive layer (123) is disposed between the first conductive layer (121) and the second conductive layer (122), is joined to both the first conductive layer (121) and the second conductive layer (122), and extends from between the first conductive layer (121) and the second conductive layer (122),
the active material layer (200A) is stacked on the first conductive layer (121),
the separator (12) is stacked on the active material layer (200A),
the second electrode (11B) is stacked over the active material layer (200A) with the separator (12) in between,
the external terminal (30A) is electrically connected to the coupling portion (40A), and
the coupling portion (40A) is joined to the third conductive layer (123).

6. The battery according to claim 5, wherein the third conductive layer (123) is separated from the support portion (110).

7. The battery according to claim 5, wherein a thickness of the third conductive layer (123) is substantially equal to a thickness of the support portion (110).

8. The battery according to any one of claims 5 to 7, wherein
a thickness of the first conductive layer (121) is smaller than a thickness of the third conductive layer (123), and
a thickness of the second conductive layer (122) is smaller than the thickness of the third conductive layer (123).

9. The battery according to any one of claims 5 to 7, wherein
the support portion (110) has a support edge (110e) facing an extension direction (DE) that is a direction in which the first conductive layer (121) extends from the support portion (110),
the active material layer (200A) has an active material edge (200Ae) facing the extension direction (DE), and
the active material edge (200Ae) is aligned with the support edge (110e) in a thickness direction (DT) of the support portion (110).
